# EUROPEAN PATENT APPLICATION

(11) **EP 3 168 729 A1**
(43) Date of publication of application: **17.05.2017**
(21) Application number: 14892223.0
(22) Date of filing: 29.08.2014
(51) Int. Cl.: G06F 3/0481

(54) **METHOD FOR DISPLAYING USER INSTRUCTION BOOK AND MOBILE TERMINAL**

(30) Priority: 08.07.2014 CN 201410324126
(71) Applicant: Huizhou TCL Mobile Communication Co., Ltd., Huizhou, Guangdong 516006 (CN)
(72) Inventor: ZHAO, Shiqing, Huizhou Guangdong 516006 (CN); ZHOU, Baozhong, Huizhou Guangdong 516006 (CN)
(74) Representative: ZHAOffice SPRL
(86) International application number: PCT/CN2014/085561
(87) International publication number: WO 2016/004672

(57) **Abstract**

A method and a mobile terminal for displaying a user guide are provided, the method comprising: displaying a user guide icon on top of the screen of the mobile terminal; when detecting that the user guide icon is clicked, displaying a description page of the user guide on the screen of the mobile terminal. By the above method, the present disclosure can remedy the deficiencies present in the prior art that paper manuals are troublesome to carry with, not environmentally friendly, expensive and not conducive to browse and use, and can meanwhile, allow the user to open the user guide at any time during the process of operating the mobile terminal, thus greatly facilitating the operation for the user.

## Description

### FIELD OF THE DISCLOSURE

The present disclosure relates to the field of electronics, and more particularly, to a method and a mobile terminal for displaying a user guide.

### BACKGROUND OF THE DISCLOURE

With the development of mobile terminal technologies, mobile terminals are enabled with more and more functions, and operations with each function are getting more and more complicated. Hence, a user guide for using the mobile terminal has become an indispensable tool for a user to learn how to operate the mobile terminal. Existing user guides, however, are generally paper manuals. The user has to read a paper manual concurrently when operating the mobile terminal, making operations extremely inconvenient. Furthermore, paper manuals are troublesome to carry along, strenuous to locate a desired function, and not conducive to environment protection. Additionally, though some mobile terminals in current markets provide an electronic user guide, the user, however, has to activate a shortcut icon seated at the desktop of the mobile terminal, or to open a folder where the user guide is stored, so as to open the electronic user guide. As such, the user has to exit the application interface currently browsed when the user needs to open the user guide, and find the corresponding shortcut icon on the desktop of the mobile terminal or find the user guide in the folder to open the user guide, which is not favorable to the operation of the user, leading to a poor user experience.

### SUMMARY OF THE DISCLOSURE

The primary technical issue the present disclosure attempting to address is to provide a method and a mobile terminal for displaying a user guide, which can remedy the deficiencies present in the prior art that paper manuals are troublesome to carry along, not environmentally friendly, expensive and not favorable to browse and use, and can meanwhile, allow the user to open the user guide at any time when operating the mobile terminal, thus greatly facilitating the operation for the user.

In order to address the above technical issue, a technical solution adopted by the present disclosure follows as below: to provide a method for displaying a user guide in a mobile terminal, the method including: displaying a user guide icon on top of screen of the mobile terminal, the user guide icon being displayed in the form of a floating window on top of the screen of the mobile terminal; when detecting that the user guide icon is clicked, displaying a description page of the user guide on the screen of the mobile terminal, the description page including a content index page and at least one function description page, specifically, when detecting that the user guide icon is clicked, displaying the content index page on the screen of the mobile terminal, the content index page including multiple content links, and when detecting that one of the content links is clicked, displaying a function description page corresponding to the clicked content link.

The function description page may be provided with multiple function links, and the method may further include, after displaying the function description page corresponding to the clicked content link: when detecting that a function link is clicked, displaying an operation interface of the function corresponding to the clicked function link, or playing a simulation demonstration video for the function corresponding to the clicked function link. The simulation demonstration video is used to demonstrate how to realize the function corresponding to the function link.

The operation interface or the display interface of the simulation demonstration video may be provided with a return button, and the method may further include: when detecting that the return button is clicked, returning to the function description page where the clicked function link is located, or to the position in the function description page where the clicked function link is located.

Displaying the user guide icon on the top of the screen of the mobile terminal may include: displaying the user guide icon on a status bar of the mobile terminal, the status bar being configured to be a region where the battery icon and the time are displayed for the mobile terminal.

In order to address the above technical issue, another technical solution adopted by the present disclosure follows as below: to provide a method for displaying a user guide on the mobile terminal, including: displaying a user guide icon on top of screen of the mobile terminal; when detecting that the user guide icon is clicked, displaying a description page of the user guide on the screen of the mobile terminal.

The description page may include a content index page and at least one function description page; displaying the description page of the user guide on the screen of the mobile terminal when detecting that the user guide icon is clicked includes: when detecting that the user guide icon is clicked, displaying the content index page on the screen of the mobile terminal, where the content index page may include multiple content links. The method may further include, after displaying the content index page on the screen of the mobile terminal: when detecting that one of the content links is clicked, displaying the function description page corresponding to the clicked content link.

The function description page may be provided with multiple function links, and the method may further comprise, after displaying the function description page corresponding to the clicked content link: when detecting that one of the function links is clicked, displaying an operation interface of the function corresponding to the clicked function link, or playing a simulation demonstration video for the function corresponding to the clicked function link, the simulation demonstration video being used to demonstrate how to realize the function corresponding to the function link.

The operation interface or the display interface of the simulation demonstration video may be provided with an return button, and the method may further include: when detecting that the return button is clicked, returning to the function description page where the clicked function link is located, or to the position in the function description page where the clicked function link is located.

Displaying the user guide icon on the top of the screen of the mobile terminal may include: displaying the user guide icon on a status bar of the mobile terminal, the status bar being configured to be a region where the battery icon and the time are displayed for the mobile terminal.

In order to address the above technical problem, yet another technical solution adopted by the present disclosure follows as below: to provide a mobile terminal for displaying a user guide, the mobile terminal comprising: a first display module configured to display a user guide icon on top of the screen of the mobile terminal; a second display module configured to, when detecting that the user guide icon is clicked, display a description page of the user guide on the screen of the mobile terminal.

The description page may include a content index page and at least one function description page. The second display module is configured to, when detecting that the user guide icon is clicked, display the content index page on the screen of the mobile terminal, the content index page including multiple content links. The mobile terminal further comprises a third display module configured to, when detecting that one of the content links is clicked, display the function description page corresponding to the clicked content link.

The function description page may be provided with multiple function links. The mobile terminal may further include a fourth display module configured to, when detecting that a function link is clicked, display an operation interface of the function corresponding to the clicked function link, or playing a simulation demonstration video for the function corresponding to the clicked function link, the simulation demonstration video being used to demonstrate how to realize the function corresponding to the function link.

The operation interface or the display interface of the simulation demonstration video may be provided with a return button. The mobile terminal may further include a switch module configured to, when detecting that the return button is clicked, return to the function description page where the clicked function link is located, or to the position in the function description page where the clicked function link is located.

The first display module may be configured to display the user guide icon on a status bar of the mobile terminal, the status bar being configured to be a region where the battery icon and the time are displayed for the mobile terminal.

Beneficial effects of the present disclosure are: differing from the prior art, the method according to the present disclosure displays the user guide icon on top of the screen of the mobile terminal, and, when detecting that the user guide icon is clicked, displays the description page of the user guide on the screen of the mobile terminal, whereby the user may open, via the user guide icon placed on top, the user guide at any time without the need to exit the interface currently viewed, thus facilitating the operation for the user. Furthermore, the user guide is displayed in the form of electronic manual on the mobile terminal, which thus is capable of remedying the deficiencies present in the prior art that paper manuals are troublesome to carry with, not environmentally friendly, expensive and not favorable to browse and use.

### BRIEF DESCRIPTION OF THE DRAWINGS

FIG. 1 is a flow chart illustrating the method for displaying a user guide on a mobile terminal according to one embodiment of the present disclosure.
FIG. 2 is a schematic diagram of displaying a user guide icon on top of desktop of the mobile terminal in the method for displaying the user guide according to one embodiment of the present disclosure.
FIG. 3 is a schematic diagram of an operation interface displaying the phone call function in the method for displaying the user guide according to one embodiment of the present disclosure.
FIG. 4 is a schematic diagram of playing a simulation demonstration video illustrating the function of how to play a video in the method for displaying the user guide according to one embodiment of the present disclosure.
FIG. 5 is a block diagram illustrating a mobile terminal for displaying the user guide according to one embodiment of the present disclosure.
FIG. 6 is a block diagram illustrating a mobile terminal for displaying the user guide according to another embodiment of the present disclosure.

### DETAILED DESCRIPTION OF THE DISCLOSURE

The present disclosure will be described in detail in relation to the accompanying drawings and embodiments.

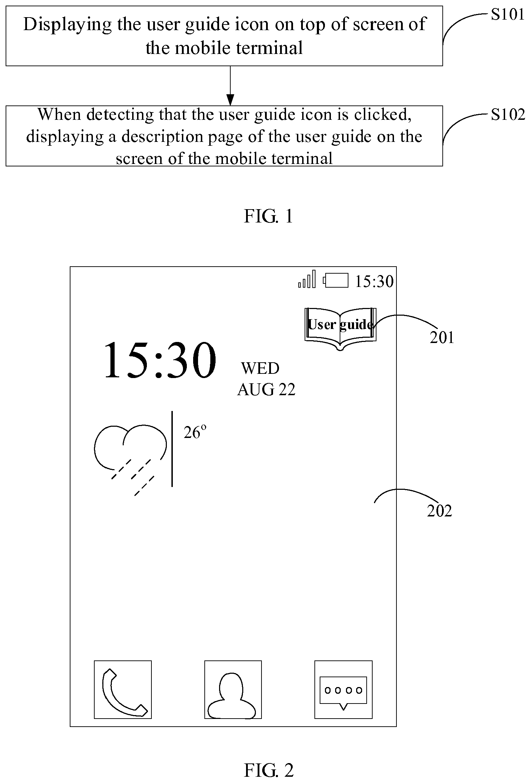

Referring to FIG. 1, which illustrates a method for displaying a user guide on a mobile terminal according to one embodiment of the present disclosure, the method comprises the following steps:
Step S101: displaying a user guide icon on top of screen of the mobile terminal.

A shortcut to the user guide will first be established, so as to obtain the user guide icon. FIG. 2 shows a schematic diagram of displaying a user guide icon 201 on top of desktop 202 of the mobile terminal. User guide icon 201 is depicted in the shape of an unfolded book, and can also be depicted in other shapes such as, for example, a circle, a triangle, a square, and so on. In order to facilitate the identification for the user, the icon may also be marked with a word such as, for example, "description", "instruction" or "operation guide".

The user guide icon may be located on an idle space in the display interface, for example, on the upper right or upper left corner of the screen. In addition, the user guide icon can also be displayed in the form of a floating window displayed on top. As such, the user can move the user guide icon at his/her will within the confine of the display interface, thus the user guide icon may be placed at any location within the display interface.

It should be appreciated that, placing the user guide icon on top may enable the user guide icon to be constantly displayed on the screen of the mobile terminal. Namely, the user guide icon is displayed in real time, either in the desktop of the mobile terminal, or in an operation interface of one of various applications installed in the mobile terminal. Hence, the user guide icon can be viewed in the interfaces of the various applications. When the user desires to open the user guide, he/she only needs to click on the user guide icon without exiting the interface currently viewed. Thus, the user may enter the user manual at any time during the operation process on the mobile terminal. "Displaying on top" as indicated in the present disclosure, preferably, entails the topmost layer among multiple graphical layers on the display interface. The multiple graphical layers may be, for example, as in the order from bottom to top: desktop background - application icons - other window widgets-the user guide, or, as in the order from bottom to top: an application running background - pop up windows - the user guide, etc.

The user guide icon can, certainly, be displayed on the top of only a predetermined operation interface. Namely, the user guide icon is constantly displayed on only a predetermined operation interface. For example, the user guide icon may be displayed on the top of the operation interface of an application where some complicated operations may be involved. As an example, the user guide icon may be displayed in real time on the operation interfaces for message, setup or alarm clock. When the user activates the message application, setup application or the alarm clock application, he/she may view in real time the user guide icon on top of the operation interfaces of these applications. Additionally, the user guide icon may not be displayed on top in a specified operation interface. For example, the user guide icon may not be displayed in an operation interface that is displayed in full-screen. For example, the user guide icon may not be displayed in a gaming interface or in a video playing interface displayed in full-screen, thus preventing the user guide icon from influencing the vision of the user.

Step S102: when detecting that the user guide icon is clicked, displaying a description page of the user guide on the screen of the mobile terminal.

The user guide icon may be regarded as a shortcut to the user guide, with the user guide icon being in a link relation with the user guide. When the user clicks on the user guide icon, the user guide may be activated and the description page of the user guide may be displayed on the screen. As such, the user may open, via the user guide icon displayed on the top, the user guide at any time without exiting the interface currently viewed, thus facilitating the operation for the user.

When detecting that the user guide icon is clicked, either the user guide stored in a local memory may be called in order to open the user guide stored in the local memory, or the user guide on the sever of the mobile terminal manufacturer may be called, namely, via the network connection, in order to open online the user guide present on the website of the mobile terminal manufacturer.

In addition, the user guide, in the present embodiment, is displayed in the form of an electronic manual displayed on the mobile terminal, which thus is capable of remedying the deficiencies existed in the prior art that paper manuals are troublesome to carry with, not environmentally friendly, expensive and not favorable to browse and use.

A preferred embodiment of the present disclosure can also enable the user to quickly find the desired description content in the user guide. In this embodiment, the description page of the user guide is provided with page turning functionality. The description page may include a content index page and at least one function description page. The content index page may be a directory page recording the page number where each of the various function description pages is located. The function description page is the page describing the operation method of each of various functions of the mobile terminal. Displaying the description page of the user guide on the screen of the mobile terminal when detecting that the user guide icon is clicked specifically includes, displaying a content index page on the screen of the mobile terminal, whereby the user can quickly find in the content index page the page number where the desired contents are located.

In the present embodiment, content links are used to enable the user to quickly find the desired function description page. Specifically, the content index page includes multiple content links, each corresponding to a home page among multiple function description pages of a function, or corresponding to any page among the multiple function description pages of the function. With regard to SMS function for example, assuming the function description pages describing the operation method of the SMS function include 3 pages in total, then the content link for the SMS function is connected to the home page of the 3 pages. When the content index page is displayed on the mobile terminal and one of the content links is clicked, the home page of the function description pages that correspond to the clicked content link is displayed. Thus, the user only needs to find the content link of the desired function in the content index page, and then click the content link, so as to open the function description page of the function, and can thus read the specific operation method in relation to the function to learn how to use the function.

The user can, certainly, find the desired function description page via turning the pages, and can also utilize the page jump function to jump from the current page to the desired function description page. In addition, the user can utilize the search function to quickly find the desired contents. Preferably, the user guide is further provided with a search functionality. For example, a volume button can be utilized to call a search bar of the user guide. When the user needs to search for the relevant description for one function, for example, when the user needs to search the function description content for "sending a message" and the user guide has already been opened, then the user may press the "+" volume button in order to display an search bar in the display interface of the user guide, and the user only needs to enter in the search bar the phrase "sending a message" and click the search button. Then, the mobile terminal will, based on the keyword of "sending a message", search in the user guide the contents relevant to "sending a message" and display the search results in a list. The user may click one of the search results in the list to enter the corresponding function description page, so as to quickly retrieve the desired content.

Furthermore, in the process of reading the user guide, the user may also perform a corresponding operation in accordance with the guidance of the user guide. For example, the user may perform the operation for making a phone call while reading the contents in the user guide with regard to how to make a phone call. Specifically, the function description page in the user guide may further be provided with multiple function links. For instance, the keyword of "making a phone call" may be set up in the function description page for making a phone call, which may be recorded in the form of a link in the function description page, and may be highlighted as needed. For example, the letters of the keyword may be marked in red, facilitating the keyword to be identified to be a link.

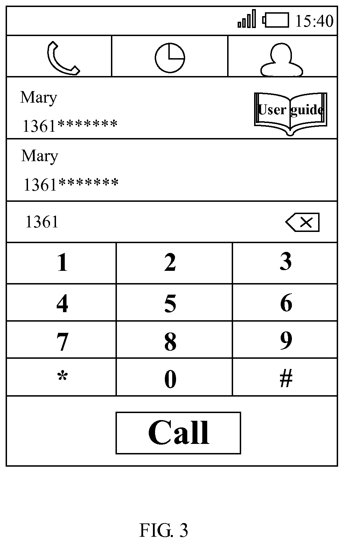

The function link may be linked to the operation interface of the corresponding function. When the mobile terminal detects that a function link is clicked, the mobile terminal will display the function operation interface corresponding to the clicked function link. For example, when the user is reading the contents in the function description page with regard to making a phone call, the user may click a link of "making a phone call" in the page, as is shown in FIG. 3. The current display interface of the mobile terminal will be switched from the description page of the user guide to the operation interface for making a phone call. The operation interface is the interface for entering the number and thus making a phone call. As such, the user can gain acquaintance with the operation interface for realizing the phone call function in order to learn how to make a phone call according to the contents of the user guide, and can also normally make a phone call in the operation interface. Therefore, the user may perform actual operations during the process of reading the user guide, thus further facilitating the user with using and learning from the user guide. Furthermore, when the user is using the mobile terminal and doesn't know how to enter the operation interface for making a phone call, the user may open the user guide and find the function description page depicting the phone call function, and click a link of "making a phone call" in the function description page, so that the user may enter the phone call operation interface to make a phone call. Therefore, the above means can reduce the difficulties of operating a mobile terminal, thus enabling more users to use the mobile terminal without difficulty.

Additionally, since the function operation interface corresponding to the clicked function link is opened via the function link in the function description page, the user may, after getting an intimate knowledge of the operation interface, return to the user guide for continual reading. Hence, in order to facilitate the user for continual reading, the operation interface of the function corresponding to the clicked function link is further provided with a return button. The mobile terminal will, when detecting the return button clicked, switch the current display interface from the operation interface to the function description page where the clicked function link is located, whereby the user can return to the user guide by clicking the return button, so as to continue reading the relevant contents. By the above means, mutual switch can be realized between the operation interface and the description page of the user guide, facilitating the operation for the user, and also enabling the user to perform practical operations while reading the user guide synchronously, thus making the function operation on the mobile terminal more intuitive and much easier.

The user can, certainly, utilize the user guide icon displayed on the top of the operation interface of the function corresponding to the clicked function link, so as to return to the user guide, specifically, to the content index page of the user guide. Additionally, when the user clicks the return button, the user may also return to the browse position in the function description page prior switch, namely, return to the position in the function description page where the clicked function link is located. The user clicking the function link in the function description page indicates that the position currently read by the user is the position where this function link is located. In order to facilitate the user with continuing reading the subsequent contents, the user may utilize the return button to return to the reading position in the function description page prior switch. Thus, the user can rapidly read the contents following this function link, or read the relevant contents before or after this function link.

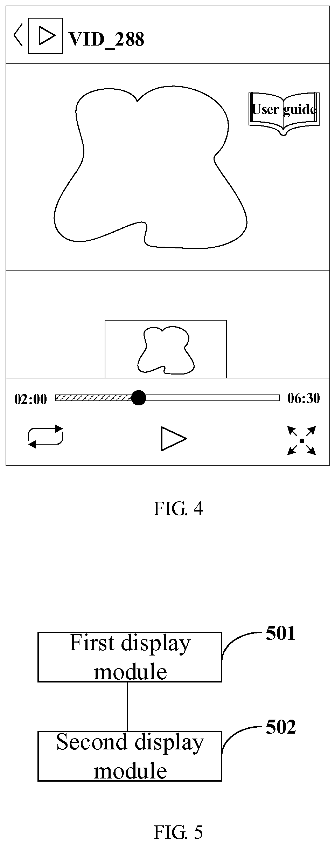

In addition, in other embodiments, the function link in the function description page may also be linked to a simulation demonstration video of the corresponding function. That is, when it is detected that the function link in the function description page is clicked, the simulation demonstration video of the function corresponding to this function link would be played. The simulation demonstration video is used to demonstrate how to realize the function corresponding to the function link. For example, when the user is reading the contents in the function description page relevant to video playing and clicks the link of "how to play a video" in the function description page, as shown in FIG. 4, the mobile terminal would play the automatic demonstration video with regard to video playing function. The contents of the video include how to find the video file needed to be played, how to start playing the video, how to stop playing the video, how to exit the video playing and other various operations associated with video playing. The display interface for playing the simulation demonstration video may also be provided with a return button for realizing the mutual switch between the description page of the user guide and the display interface of the simulation demonstration video.

The function link in the function description page may be linked to different contents as needed. It may be linked to an actual operation interface of the function, and may also be linked to the simulation demonstration video of the function. In relation to the link of "making a phone call" for example, the function link can also be linked to the simulation demonstration video for demonstrating how to make a phone call.

It should be noted that, by the simulation demonstration video of the corresponding function, the present embodiment enables the user to intuitively observe how to operate the corresponding function, and to rapidly grasp the operations of the corresponding function, especially for the users those ignorant of the operations and cannot understand the text description in the user guide (for example, due to lack of education or language barrier) that they can comprehend very effectively and rapidly on how to correctly use the corresponding function. It should also be appreciated that, some elderly users can effectively learn the operations during the using process, rather than asking for other's help again and again on even some simple operations such as, for example, dialing operation. Thus, the present disclosure plays a similar role of wiping out illiteracy, which presents the humanistic care, and thus is beneficial to be promoted.

In the method for displaying the user guide according to another embodiment of the present disclosure, the user guide icon may be displayed in the status bar of the mobile terminal. The status bar of the mobile terminal is the region for displaying the battery icon and time of the mobile terminal. In the display interface of the mobile terminal, on topmost portion of the display interface may, generally, be the region for displaying the battery status, time and communication signal and some other information. This region is used customarily to display the battery status, time and some other information. Thus, it won't be used as the operation interface for an application. And it will be displayed in real time when each of the various applications is activated. Thus, placing and displaying the user guide icon in this region can not only prevent the user guide icon from occluding the operation interface of various functions or various applications, but can also achieve an equivalent effect of displaying the user guide icon on top.

It should be noted that, the user may enable an option to display the user guide icon on top of the screen of the mobile terminal, and may also enable another option to deactivate the display-on-top functionality. For example, when the user is acquainted with various capabilities of the mobile terminal, the user may choose to deactivate the display-on-top functionality for the user guide icon, so as to not display it on the top of the screen.

FIG. 5 illustrates a mobile terminal for displaying the user guide according to an embodiment of the present disclosure. The mobile terminal comprises a first display module 501 and a second display module 502. The first display module 501 is configured to display the user guide icon on top of the screen of the mobile terminal.

The user guide icon may be depicted in a shape of an unfolded book, and may also be depicted in other shapes such as, for example, a circle, a triangle or a square and so on. In order to facilitate the identification for the user, the icon may also be marked with a word such as, for example, "description", "instruction" or "operation guide".

The user guide icon may be located on an idle space of the display interface, for example, on the upper right or upper left corner of the screen. In addition, the user guide icon can also be displayed in the form of a floating window displayed on the top. As such, the user can move the user guide icon at his/her will within the confine of the display interface, thus the user guide icon may be placed at any location within the display interface.

It should be appreciated that, placing the user guide icon on the top may enable the user guide icon to be constantly displayed on top of the screen of the mobile terminal. Namely, the user guide icon is displayed in real time, either in the desktop of the mobile terminal, or in the operation interface of one of various applications installed in the mobile terminal. Hence, the user guide icon can be viewed in the interfaces of the various applications. When the user desires to open the user guide, he/she only needs to click on the user guide icon without the need to exit the interface currently viewed. Thus the user may enter the user manual at any time during the operation process on the mobile terminal. "Displaying on top" as indicated in the present disclosure, preferably, entails the topmost layer among multiple graphical layers on the display interface. The multiple graphical layers can be, for example, as in the order from bottom to top: desktop background - application icons - other window widgets - the user guide, or, as in the order from bottom to top: an application running background - pop up windows - the user guide icon, etc.

The user guide icon can, certainly, be displayed on the top of only a predetermined operation interface. Namely, the user guide icon is constantly displayed on only a predetermined operation interface. For example, the user guide icon may be displayed on the top of the operation interface of an application where some complicated operations may be involved. As an example, the user guide icon may be displayed in real time in operation interfaces for message, setup or alarm clock. When the user activates the message application, setup application or the alarm clock application, he/she may view in real time the user guide icon on the operation interfaces of these applications. Additionally, the user guide icon may not be displayed on top in a specified operation interface. For example, the user guide icon may not be displayed in an operation interface that is displayed in full-screen. For example, the user guide icon may not be displayed in a gaming interface or in video playing interface, thus preventing the user guide icon from influencing the vision of the user.

The second display module 502 is configured to, when detecting that the user guide icon is clicked, display a description page of the user guide on the screen of the mobile terminal. The user guide icon may be regarded as a shortcut to the user guide, with the user guide icon being in a link relation with the user guide. When the user clicks on the user guide icon, the user guide is activated and the second display module 502 will, after detecting the click action, display the description page of the user guide on the screen. As such, the user may open, via the user guide icon displayed on top, the user guide at any time without the need to exit the interface currently viewed, thus facilitating the operation for the user.

The second display module 502 is further configured to, when detecting that the user guide icon is clicked, either call the user guide stored in a local memory in order to open the user guide stored in the local memory, or call the user guide present on a sever of the mobile terminal manufacturer, namely, call via the network connection in order to open online the user guide present on the website of the mobile terminal manufacturer.

In addition, the user guide, in the present embodiment, is displayed in the form of an electronic manual displayed on the mobile terminal. Thus, it is capable of remedying the deficiencies existed in the prior art that paper manuals are troublesome to carry with, not environmentally friendly, expensive and not favorable to browse and use.

In the mobile terminal for displaying the user guide according to another embodiment of the present disclosure, the first display module 501 is configured to display the user guide icon in a status bar of the mobile terminal, the status bar of the mobile terminal being the region for displaying the battery icon and time for the mobile terminal. In the display interface of the mobile terminal, on topmost portion of the display interface may, generally, be the region for displaying the battery status, time and communication signal and some other information. This region is used customarily to display the battery status, time and some other information, which thus won't be used as the operation interface for an application, and it will be displayed in real time when each of the various applications is activated. Therefore, placing and displaying the user guide icon in this region can not only prevent the user guide icon from occluding the operation interface of one of the various functions or various applications, but can also achieve an equivalent effect of displaying the user guide icon on top.

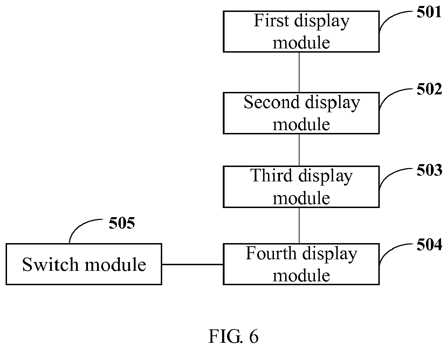

Referring to FIG. 6, in the mobile terminal according to an embodiment of the present disclosure, the user can rapidly navigate the desired description content in the user guide. In this embodiment, the description page of the user guide is provided with page turning functionality. The description page includes a content index page and at least one function description page. The content index page may be a directory page recording the page number where each of the multiple function description pages is located. The function description pages are for describing the operation methods of various functions of the mobile terminal. The second display module 502 may, when detecting that the user guide icon is clicked, display a content index page of the description page of the user guide on the screen of the mobile terminal, whereby the user can rapidly find in the content index page the page number where the desired content is located.

In the present embodiment, content links are used to enable the user to quickly find the desired function description page. Specifically, the mobile terminal further includes a third display module 503. The content index page includes multiple content links, each corresponding to a home page of function description pages of a function. With regard to SMS function for example, assuming the function description pages describing the operation method of the SMS function include 3 pages in total, then the content link for the SMS function is connected to the home page among the 3 pages. The third display module 503 is configured to, when detecting that one of the content links is clicked, display the function description page corresponding to the clicked content link. Thus, the user only needs to find the content link of the desired function in the content index page, and then click the content link, so as to open the function description page of the function, and can thus read the specific operation method in relation to the function to learn how to use the function.

The user can, certainly, find the desired function description page via turning the pages, and can also utilize the page jump functionality to jump from the current page to the desired function description page.

Furthermore, in the process of reading the user guide, the user may also perform a corresponding operation in accordance with the guidance of the user guide. For example, the user may perform the operations for making a phone call while reading the contents in the user guide with regard to how to make a phone call. Specifically, the function description page in the user guide may further be provided with a function link. For instance, the keyword of "making a phone call" may be set up in the function description page for making a phone call, which may be recorded in the form of a link in the function description page, and may be highlighted as needed. For example, the letters of the keyword may be marked in red, facilitating the keyword to be identified to be a link.

The function link may be linked to the operation interface of the corresponding function. The mobile terminal further includes a fourth display module 504, which is configured to, when the mobile terminal detects that one of the function links is clicked, display the operation interface of the function corresponding to the clicked function link. For example, when detecting that the link of "making a phone call" is clicked, the operation interface for making a phone call would be displayed. The operation interface is the interface for entering a number and thus making a phone call, whereby the user can get acquainted with the operation interface for realizing the phone call function, so as to, basing on the contents of the user guide, learn how to make a phone call, and can also normally makes a phone call in this operation interface. Therefore, the user may perform practical operations during the process of reading the user guide, thus further facilitating the user with using and learning from the user guide. Furthermore, when the user is using the mobile terminal and doesn't know how to enter the operation interface for making a phone call, the user may open the user guide and find the function description pages depicting the phone call function, and click the link of "making a phone call" in the function description page, so that the user may enter the phone call operation interface to make a phone call. Therefore, the above means can reduce the difficulties of operating a mobile terminal, thereby enabling more users to use the mobile terminal without difficulty.

In addition, the mobile terminal further includes a switch module 505, for realizing the switch between the description page of the user guide and the operation interface of one of various functions. Since the function operation interface corresponding to the clicked function link is opened via the function link in the function description page, the user may desire to, after getting intimate knowledge of the operation interface, return to the user guide for continual reading. Hence, in order to facilitate the user for continual reading, the operation interface of the function corresponding to the clicked function link is further provided with a return button. The switch module 505 may, when detecting the return button clicked, switch the current display interface from the operation interface to the function description page where the clicked function link is located, whereby the user may click the return button to return to the user guide, so as to continue reading the relevant contents. By the above means, mutual switch can be realized between the operation interface and the description page of the user guide, facilitating the operation for the user, and also enabling the user to perform practical operations while reading the user guide synchronously, thus making operations associated with functions of the mobile terminal more intuitive and much easier.

The user can, certainly, utilize the user guide icon displayed on the top of the operation interface of the function corresponding to the clicked function link, so as to return to the user guide, specifically, to the content index page of the user guide. Additionally, when the user clicks the return button, the user may also return to the browse position in the function description page prior switch, namely, return to the position in the function description page where the clicked function link is located. The user clicking the function link in the function description page indicates that the position currently read by the user is the location where this function link is located. In order to facilitate the user with continuing reading the subsequent contents, the user may utilize the return button to return to the reading position in the function description page prior switch. Thus, the user can rapidly read the contents following this function link, or read the relevant contents before or after this function link.

In addition, in other embodiments, the function link in the function description page may also be linked to a simulation demonstration video of the corresponding function. That is, the fourth display module 504 is configured to, when detecting that one of the function links in the function description page is clicked, play the simulation demonstration video of the function corresponding to this function link. The simulation demonstration video is used to demonstrate how to realize the function corresponding to the function link.

It is worth note that, by the simulation demonstration video for the corresponding function, the user can intuitively observe how to operate the corresponding function, and can rapidly grasp the operations of the corresponding function; especially for the users those ignorant of the operations and cannot understand the text description in the user guide (for example, due to lack of education or language barrier) that they can comprehend very effectively and rapidly on how to correctly use the corresponding function. It should also be appreciated that, some elderly users can effectively learn the operations during the process of using them, rather than asking for other's help again and again on even some simple operations such as, dialing operation. Thus, the present disclosure plays a similar role of wiping out illiteracy, which presents the humanistic care, and thus is beneficial to be promoted.

The function links in the function description page may be linked to different contents as needed. They may be linked to an actual operation interface of the function, and may also be linked to a simulation demonstration video of the function. With regard to the link of "making a phone call" for example, it can also be linked to the simulation demonstration video for demonstrating how to make a phone call, but it is not limited thereto.

What is described above is merely the embodiments of the present disclosure, thus shouldn't be construed to be limiting the patent scope of the present disclosure. Any equivalent structures or equivalent process flow modifications that are made according to the specification and the attached drawings of the present disclosure, or any direct or indirect applications of the present disclosure in other related technical fields shall all be covered within the scope of the present disclosure.

## Claims

1. A method for displaying a user guide in a mobile terminal, the method comprising:
displaying a user guide icon on top of screen of the mobile terminal, wherein the user guide icon is displayed on top in the form of a floating window;
when detecting that the user guide icon is clicked, displaying a description page of the user guide on the screen of the mobile terminal, wherein, the description page comprises a content index page and at least one function description page, when detecting that the user guide icon is clicked, displaying the content index page on the screen of the mobile terminal, the content index page comprising a plurality of content links, and when detecting that one of the content links is clicked, displaying one of the at least one function description page corresponding to the clicked content link.

2. The method according to claim 1, wherein each of the at least one function description page is provided with a plurality of function links, the method further comprising, after displaying the function description page corresponding to the clicked content link:
when detecting that one of the plurality of function links is clicked, displaying an operation interface of a function corresponding to the clicked function link, or playing a simulation demonstration video for the function corresponding to the function link, the simulation demonstration video being used to demonstrate how to realize the function corresponding to the function link.

3. The method according to claim 2, wherein the operation interface or the display interface of the simulation demonstration video is provided with a return button, the method further comprising:
when detecting that the return button is clicked, returning to the function description page where the clicked function link is located, or to a position in the function description page where the clicked function link is located.

4. The method according to claim 1, wherein displaying the user guide icon on the top of the screen of the mobile terminal comprises:
displaying the user guide icon on a status bar of the mobile terminal, the status bar being configured to be a region where a battery icon and time are displayed for the mobile terminal.

5. A method for displaying a user guide in a mobile terminal, the method comprising:
displaying a user guide icon on top of screen of the mobile terminal;
when detecting that the user guide icon is clicked, displaying a description page of the user guide on the screen of the mobile terminal.

6. The method according to claim 5, wherein the description page comprises a content index page and at least one function description page, displaying the description page of the user guide on the screen of the mobile terminal when detecting that the user guide icon is clicked comprises:
when detecting that the user guide icon is clicked, displaying the content index page on the screen of the mobile terminal;
the content index page comprising a plurality of content links, the method further comprising, after displaying the content index page on the screen of the mobile terminal: when detecting that one of the content links is clicked, displaying the function description page corresponding to the clicked content link.

7. The method according to claim 6, wherein the at least one function description page is provided with a plurality of function links, the method further comprising, after displaying the function description page corresponding to the clicked content link:
when detecting that one of the function links is clicked, displaying an operation interface of a function corresponding to the clicked function link, or playing a simulation demonstration video of the function corresponding to the function link, the simulation demonstration video being configured to demonstrate how to realize the function corresponding to the function link.

8. The method according to claim 7, wherein the operation interface or the display interface of the simulation demonstration video is provided with a return button, the method further comprising:
when detecting that the return button is clicked, returning to the function description page where the clicked function link is located, or to a position in the function description page where the clicked function link is located.

9. The method according to claim 5, wherein displaying the user guide icon on the top of the screen of the mobile terminal comprises:
displaying the user guide icon on a status bar of the mobile terminal, the status bar being configured to be a region where a battery icon and time are displayed for the mobile terminal.

10. A mobile terminal for displaying a user guide, the mobile terminal comprising:
a first display module configured to display the user guide icon on top of screen of the mobile terminal;
a second display module configured to, when detecting that the user guide icon is clicked, display a description page of the user guide on the screen of the mobile terminal.

11. The mobile terminal according to claim 10, wherein the description page comprises a content index page and at least one function description page; the second display module is configured to, when detecting that the user guide icon is clicked, display the content index page on the screen of the mobile terminal; the content index page comprising a plurality of content links, the mobile terminal further comprises a third display module configured to, when detecting that one of the content links is clicked, displaying the function description page corresponding to the clicked content link.

12. The mobile terminal according to claim 11, wherein the function description page is provided with a plurality of function links, the mobile terminal further comprising a fourth display module configured to, when detecting that one of the function link is clicked, display an operation interface of a function corresponding to the clicked function link, or play a simulation demonstration video for the function corresponding to the clicked function link, the simulation demonstration video being used to demonstrate how to realize the function corresponding to the function link.

13. The mobile terminal according to claim 12, wherein the operation interface or the display interface of the simulation demonstration video is provided with an return button, the mobile terminal further comprising a switch module configured to, when detecting that the return button is clicked, return to the function description page where the clicked function link is located, or to a position in the function description page where the clicked function link is located.

14. The mobile terminal according to claim 10, wherein the first display module is configured to display the user guide icon on a status bar of the mobile terminal, the status bar being configured to be a region where a battery icon and time are displayed for the mobile terminal.
